# EUROPÄISCHE PATENTANMELDUNG

(11) **EP 3 034 471 A1**
(43) Veröffentlichungstag der Anmeldung: **22.06.2016**
(21) Anmeldenummer: 15187566.3
(22) Anmeldetag: 30.09.2015
(51) Int. Cl.: C02F 1/32

(54) **SPENDERVORRICHTUNG**

(30) Priorität: 16.12.2014 DE 202014106061 U
(71) Anmelder: Maierhofer, Hubert, 93047 Regensburg (DE)
(72) Erfinder: Maierhofer, Hubert, 93047 Regensburg (DE)
(74) Vertreter: Glück Kritzenberger Patentanwälte PartGmbB

(57) **Zusammenfassung**

Die Erfindung betrifft eine Spendervorrichtung (1) zum keimfreien Abgeben von Flüssigkeiten umfassend wenigstens einen in einem Gehäuse (2) angeordneten Flüssigkeitskanal (3) mit einer Abgabeöffnung (4) zum Abgeben der Flüssigkeit und einen unterhalb der Abgabeöffnung (3) vorgesehenen Standbereich (5) zum Abstellen eines Flüssigkeitsgefäßes (7), wobei zwischen der Abgabeöffnung (3) und dem Standbereich (5) ein von außen zugänglicher Abgabebereich (6) zum Abgeben der Flüssigkeit in das Flüssigkeitsgefäß (7) ausgebildet ist. Vorteilhaft sind zwischen der Abgabeöffnung (3) und dem Standbereich (5) wenigstens zwei UV-Strahlungsquellen (10) vorgesehen sind, wobei mindestens eine UV-Strahlungsquelle (10.2) auf den Standbereich (5) und mindestens eine weitere UV-Strahlungsquelle (10.1) auf die Abgabeöffnung (3) ausgerichtet ist. In einer alternativen Ausführungsvariante ist an dem Flüssigkeitskanal (3) wenigstens eine Heizvorrichtung (16) zum elektrischen Beheizen im Bereich der Abgabeöffnung (4) angeordnet ist und zwischen der Abgabeöffnung (3) und dem Standbereich (5) mindestens eine UV-Strahlungsquelle (10.2) vorgesehen ist, die auf den Standbereich (5) ausgerichtet ist.

## Beschreibung

Die vorliegende Erfindung betrifft eine Spendervorrichtung zum keimfreien Abgeben von Flüssigkeiten gemäß den Merkmalen der jeweiligen Oberbegriffe der nebengeordneten Patentansprüche 1 und 3.

Bei der Trinkwasseraufbereitung innerhalb von Spendervorrichtungen im Bereich von Einzelverbrauchern (Haushalt) oder Großverbrauchern (Krankenhäusern, Betrieben, Gaststätten, etc.) ist entscheidend, dass das gezapfte bzw. abgegebene Wasser dem Verbraucher keimfrei zur Verfügung gestellt wird. Insbesondere besteht die Gefahr, dass bei unregelmäßiger Benutzung, aber auch bei häufiger Inanspruchnahme derartiger Spendervorrichtungen am freien Ende Abgabeöffnung für die Flüssigkeit ein oder auch mehrere Wassertropfen hängen bleiben, die Anlass zur Keimbildung geben können. Ferner ist es auch möglich, dass sich beispielsweise am Rand der Auslassöffnung von Zeit zu Zeit Keime ansammeln, die von Nutzern der Spendervorrichtungen oder aus der Umgebung stammen können.

Hierfür ist es bereits aus dem Stand der Technik bekannt geworden, UV-Strahlungsquellen im Bereich der Abgabeöffnung für die Flüssigkeit einer derartigen Spendervorrichtung vorzusehen, um damit desinfizierend auf diesen keimbelasteten Bereich einer Spendervorrichtung einzuwirken und hierdurch insbesondere eine Rückverkeimung im Bereich der Abgabeöffnung zu unterbinden. Aus der DE 10 2007 055 449 A1 ist beispielsweise eine Zapfstelle mit einem Auslass für Flüssigkeiten bekannt, bei der wenigstens eine UV-C-Strahlungsquelle vorgesehen ist, die derart in der Nähe der Abgabeöffnung angeordnet ist, dass der Auslauf im unmittelbaren Bereich der Abgabeöffnung seitlich von außen bestrahlt wird, um eine Rückverkeimung am Auslass zu vermeiden. Nachteilig wird hierdurch jedoch nur der äußere Wandungsbereich des freien Endes des die Abgabeöffnung bildenden Flüssigkeitskanals bestrahlt.

Ausgehend hiervon ist es Aufgabe der vorliegenden Erfindung, eine Spendervorrichtung zum keimfreien Abgeben von Flüssigkeiten anzugeben, bei der die Rückverkeimung im Bereich der Abgabeöffnung einer gattungsgemäßen Spendervorrichtung weiter reduziert werden kann sowie bereits das Entstehen von Keimen im Abgabebereich einer derartigen Spendervorrichtung effektiv vermieden werden kann. Diese Aufgabe wird mit den Merkmalen der nebengeordneten Patentansprüche 1 und 3 gelöst. Die jeweiligen Unteransprüche betreffen dabei besonders bevorzugte Ausführungsvarianten der Erfindung.

Ein wesentlicher Aspekt der Erfindung gemäß einer Ausführungsform der Erfindung ist darin zu sehen, dass zwischen der Abgabeöffnung und dem Standbereich wenigstens zwei UV-Strahlungsquellen vorgesehen sind, wobei mindestens eine UV-Strahlungsquelle auf den Standbereich und mindestens eine weitere UV-Strahlungsquelle auf die Abgabeöffnung ausgerichtet ist. In einer alternativen Ausführungsform der Erfindung ist an dem Flüssigkeitskanal eine Heizvorrichtung zum elektrischen Beheizen im Bereich der Abgabeöffnung angeordnet und mindestens eine auf den Standbereich ausgerichtete UV-Strahlungsquelle vorgesehen. Besonders vorteilhaft ermöglichen die erfindungsgemäß vorgesehenen UV-Strahlungsquellen, die sowohl auf die Abgabeöffnung, als auch auf den Standbereich ausgerichtet sind, eine Keimfreimachung des gesamten Abgabebereiches der Spendervorrichtung, die damit insbesondere nicht auf die Rückverkeimung der Abgabeöffnung beschränkt ist. Besonders vorteilhaft wird damit auch das die Abgabeöffnung bildende freie Ende des Flüssigkeitskanals innen bestrahlt, so dass bereits durch die Abgabeöffnung in den Flüssigkeitskanal eingedrungene Keime effektiv abgetötet werden können.

Ferner wird durch die Ausrichtung der wenigstens einen weiteren UV-Strahlungsquelle auf den Standbereich auch ein während des eigentlichen Füllvorgangs dort platziertes Flüssigkeitsgefäß mit desinfiziert bzw. zusätzlich entkeimt, wodurch die Entstehung von Keimen im Abgabebereich effektiv verhindert werden kann. Darüber hinaus wird mithin die abzugebende Flüssigkeit selbst während des Abfüllens sowohl durch die mindestens eine auf die Abgabeöffnung, als auch durch die mindestens eine weitere auf den Standbereich gerichtete UV-Strahlungsquelle einer Entkeimung unterzogen. Die erfindungsgemäße Spendervorrichtung zeichnet sich damit durch einen hohen Hygienegrad aus und ist dabei besonderes bevorzugt in keimbelasteten Umgebungen, beispielsweise Krankenhäusern oder Pflegeheimen einsetzbar. Ebenso eignet sich die erfindungsgemäße Spendervorrichtung jedoch auch für Einzelverbraucher.

Vorteilhafterweise ist dabei zwischen der Abgabeöffnung und dem Standbereich mindestens eine Halteplatte mit einer Ober- und Unterseite mit wenigstens einer Durchbrechung vorgesehen und dass an der Unterseite die mindestens eine auf den Standbereich ausgerichtete UV-Strahlungsquelle angeordnet ist. Weiterhin vorteilhaft ist an der Oberseite der wenigstens einen Halteplatte die mindestens eine auf die Abgabeöffnung ausgerichtete UV-Strahlungsquelle angeordnet.

Unter einer UV-Strahlungsquelle im erfindungsgemäßen Sinne werden prinzipiell alle eine ultra-violette Strahlung emittierende Strahlungsquellen verstanden, und zwar mit einem zum UV-Bereich zählenden Lichtwellenspektrum. Nach einer bevorzugten Ausführungsvariante weisen die UV-Strahlungsquellen ein Lichtwellenspektrum zwischen 255nm und 264nm, besonders bevorzugt eine Lichtwellenlänge von 260nm auf. Beispielsweise kann die UV-Strahlungsquelle als UV-Leuchtdiode, vorzugsweise als UV-C Leuchtdiode ausgebildet sein. Vorteilhaft ist es, wenn die UV-Strahlungsquellen einen Abstrahlwinkel bezogen auf eine Mittellängsachse zwischen 1° und 75°, besonders bevorzugt zwischen 3° und 60°, aufweisen. Alternativ kann zumindest eine der UV-Strahlungsquellen als Gasentladungslampe, vorzugsweise als Niederdruckgasentladungslampe und/oder Hochdruckgasentladungslampe, besonders bevorzugt als Niederdruck - Quecksilberdampflampe und/oder Hochdruck - Quecksilberdampflampe ausgebildet sein.

Nach einer weiteren Ausführungsvariante ist die Mittellängsachse der wenigstens einen weiteren UV-Strahlungsquelle auf die Abgabeöffnung ausgerichtet, während die Mittellängsachse der mindestens einen UV-Strahlungsquelle auf den Standbereich zeigt. In diesem Zusammenhang kann es auch vorteilhaft sein, wenn die mindestens eine weitere UV-Strahlungsquelle einen Abstrahlwinkel von jeweils 3° und die mindestens eine UV-Strahlungsquelle einen Abstrahlwinkel von jeweils 60° aufweist.

Nach einer nochmals weiteren Ausführungsvariante ist die wenigstens eine Heizvorrichtung als Heizspule oder als Wirbelstromheizung ausbildet ist, die an oder im Bereich der Abgabeöffnung angeordnet ist. Besonders vorteilhaft kann die Heizspule mit Niedervoltspannung, vorzugsweise mit einer Spannung von 24V, betrieben werden. Bevorzugt kann auch vorgesehen sein, dass die Heizspule mit einer Stromstärke betrieben wird, die ein Aufheizen des Flüssigkeitskanals im Bereich der Abgabeöffnung auf eine Temperatur zwischen 85°C und 125°C bewirkt.

Nach einer wiederum weiteren Ausführungsvariante kann vorgesehen sein, dass die wenigstens eine Heizeinrichtung und die mindestens eine auf den Standbereich ausgerichtete UV-Strahlungsquelle separate zueinander schaltbar ausgebildet sind.

Die Ausdrucke "näherungsweise", "im Wesentlichen", "ca." oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: eine schematisch, perspektivische Gesamtansicht einer ersten Ausführungsvariante einer erfindungsgemäßen Spendervorrichtung,
- Fig. 2: eine schematische Ansicht des Abgabebereiches einer erfindungsgemäßen Spendervorrichtung nach Figur 1

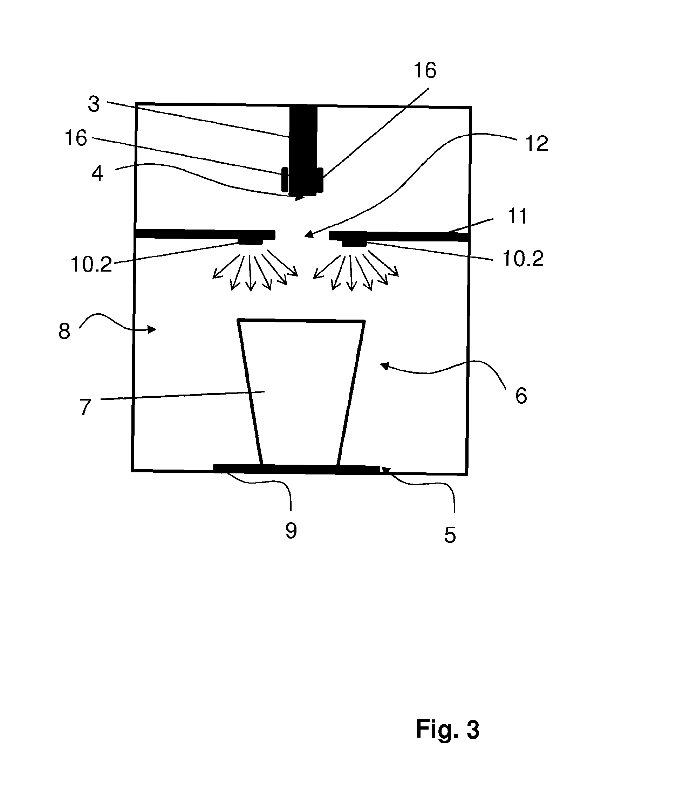

- Fig. 3: eine schematische Ansicht des Abgabebereiches einer weiteren Ausführungsvariante einer erfindungsgemäßen Spendervorrichtung
- Fig.4: eine schematische Ansicht des Abgabebereiches einer nochmals weiteren Ausführungsvariante einer erfindungsgemäßen Spendervorrichtung.

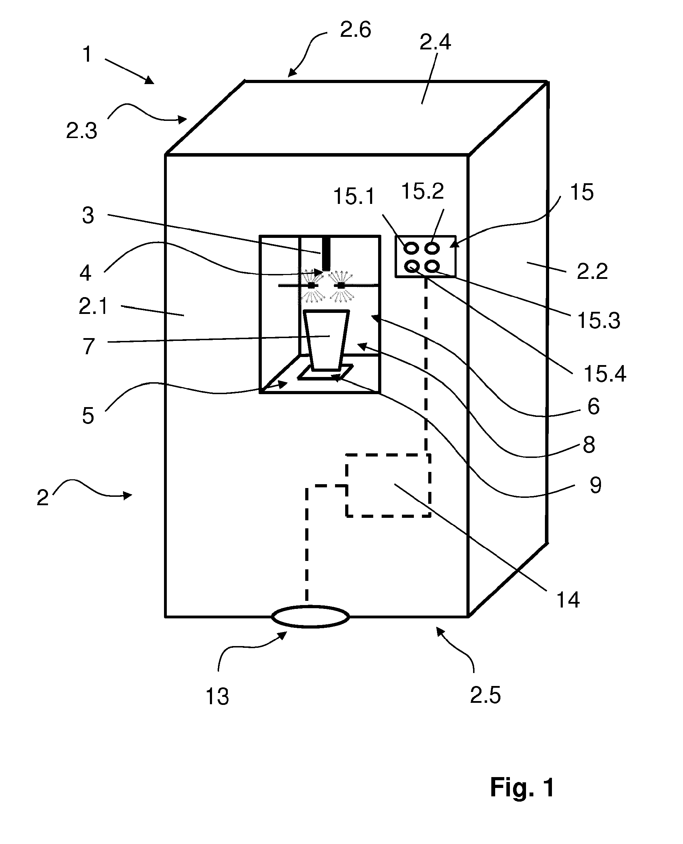

Figur 1 zeigt in vereinfachter, schematisch perspektivischer Gesamtansicht eine erste Ausführungsvariante einer erfindungsgemäßen Spendervorrichtung 1 zum Abgeben von Flüssigkeiten mit einem Gehäuse 2, das dazu ausgebildet ist, zumindest einen Flüssigkeitskanal 3 mit einer freiendseitig angeordneten Abgabeöffnung 4 aufzunehmen.

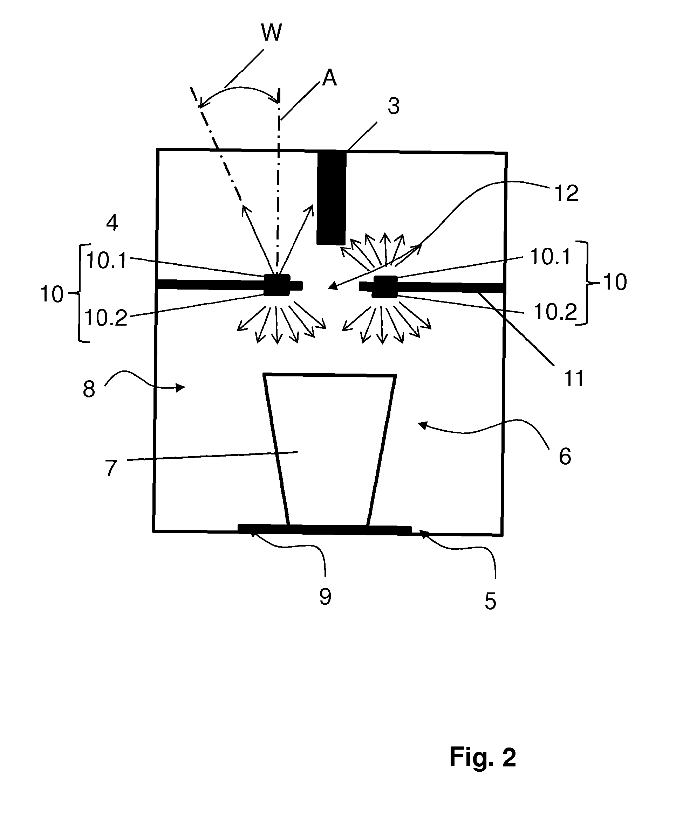

Aus Übersichtlichkeitsgründen sind dabei einzelne Bauteile nur in der Figur 2 mit Bezugszeichen versehen, wodurch Figur 1 in Zusammenschau mit Figur 2 zu lesen ist. Gattungsgemäße Spendervorrichtungen 1 sind aus dem Stand der Technik hinreichend bekannt. Dabei ist das Gehäuse 2 der in Figur 1 gezeigten Ausführungsvariante im Wesentlichen quaderförmig gestaltet und weist einen Frontbereich 2.1, einen rechten und linken Seitenbereich 2.2 und 2.3, einen Deckelbereich 2.4, einen Bodenbereich 2.5 sowie einen nicht dargestellten Rückbereich 2.6 auf. In der gezeigten Ausführungsvariante sind die Front-, Seiten-, Boden-, Deckel- und Rückbereich 2.1 bis 2.6 plattenartig, mit einer im Wesentlichen planaren Oberfläche, ausgebildet. Da die Formgebung des Gehäuses 2 jedoch für das Wesen der Erfindung unerheblich ist, beschränkt sich die Formgebung des Gehäuses 2 ausdrücklich nicht auf die in Figur 1 dargestellte Ausführungsvariante.

Im Frontbereich 2.1 des Gehäuses 2 ist weiterhin zwischen der Abgabeöffnung 4 des Flüssigkeitskanals 3 und einem Standbereich 5 ein von außerhalb des Gehäuses 2 zugänglicher Abgabebereich 6 zum Abgeben einer Flüssigkeit in ein Flüssigkeitsgefäß 7 vorgesehen. Der Abgabebereich 6 kann dabei zu der planaren Oberfläche des Frontbereiches 2.4 des Gehäuses 2 zurückspringend ausgebildet sein, so dass sich dieser innerhalb des Gehäuses 2 in einer von außen zugänglichen Ausnehmung 8 des Frontbereiches 2.4 befindet. Alternativ ist es auch möglich, dass der Abgabebereich 6 nicht innerhalb des Gehäuses 2 in einer Ausnehmung 8, sondern aus dem Frontbereich 2.4 herausspringend ausgebildet ist. Erfindungswesentlich hierbei muss lediglich die von außerhalb der Spendervorrichtung 1 mögliche Zugänglichkeit des Abgabebereiches 5 zwischen der Abgabeöffnung 4 und dem Standbereich 5 zum Abgeben der Flüssigkeit in das Flüssigkeitsgefäß 7 gewährleistet sein.

Weiterhin kann vorgesehen sein, dass der in der Ausnehmung 8 angeordnete zurückspringende Abgabebereich 6 mit einer nicht dargestellten Schließvorrichtung, die beispielsweise als eine am Frontbereich 2.1 angeordnete Tür ausgebildet sein kann, gegenüber der äußeren Atmosphäre der Spendervorrichtung 1 dichtend verschlossen wird. Die nicht dargestellte Tür kann hierbei entweder mittels Scharnieren an dem Frontbereich 2.1 verschwenkbar angeordnet werden, oder alternativ auch als Schiebetür ausgebildet sein, die horizontal oder vertikal, vorzugsweise hinter dem Frontbereich 2.1, beispielweise mittels Führungsschienen verschiebbar ist.

Nach einer nicht dargestellten Ausführungsvariante ist es auch möglich, die Schließvorrichtung sensor- und motorgesteuert zu betätigen, indem die Spendervorrichtung 1 hierfür vorzugsweise einen oberhalb der Ausnehmung 8, am Frontbereich 2.1 angeordneten Bewegungssensor umfasst, der bewegungssignalabhängig ein motorgesteuertes Öffnen und/oder Schließen der Schließvorrichtung ermöglicht. Es kann weiterhin vorgesehen sein, dass die Schließvorrichtung im unbetätigten Zustand der Spendervorrichtung 1 die Ausnehmung 8 verschießt und diese nur vor und/oder während und/oder nach dem Abgeben der Flüssigkeit öffnet.

Ferner ist in der Ausführungsvariante der Figur 1 innerhalb der Ausnehmung 8 im oberen Bereich der Flüssigkeitskanal 3 mit seiner Abgabeöffnung 4 zum Abgeben der Flüssigkeit vorgesehen, während unterhalb des Flüssigkeitskanals 3, ebenfalls innerhalb der Ausnehmung 8, der Standbereich 5 zum Abstellen des Flüssigkeitsgefäßes 7 angeordnet ist. Im Standbereich 5 kann zudem eine Abflusseinrichtung 9 für eventuell überlaufendes Wasser aus dem Flüssigkeitsgefäß 7 vorgesehen sein, der je nach Anwendungsbereich der Spendervorrichtung 1, also ob Einzel- oder Großverbraucher, entweder eine Tropfschale oder alternativ ein Abwasseranschluss zugeordnet sein kann.

Erfindungsgemäß sind in der Ausführungsform nach Figur 1 zwischen der Abgabeöffnung 4 und dem Standbereich 5 wenigstens zwei UV-Strahlungsquellen 10 vorgesehen, wobei mindestens eine UV-Strahlungsquelle 10.1 auf die Abgabeöffnung 4 und mindestens eine UV-Strahlungsquelle 10.2 auf den Standbereich 5 ausgerichtet ist. Beispielsweise können die UV-Strahlungsquellen 10 hierfür an einer zwischen der Abgabeöffnung 4 und dem Standbereich 5 vorgesehenen Halteplatte 11 mit beispielsweise mindestens einer Durchbrechung 12 angeordnet sein, wobei die mindestens eine auf die Abgabeöffnung 4 gerichtete UV-Strahlungsquelle 10.1 an einer Oberseite 11.1 der Haltepalte 11 und die mindestens eine auf den Standbereich 5 ausgerichtete UV-Strahlungsquelle 10.2 an einer Unterseite 11.2 der Halteplatte 11 angeordnet sein können. Es versteht sich für den Fachmann, dass er zahlreiche technisch gleichwirkende Alternativen zu der Halteplatte 11 kennt, die er hier je nach Anwendungsfall als Haltemittel heranziehen würde. Die aus einem Polymer oder metallischen Werkstoff herstellbare Halteplatte 11 kann dabei an dem Gehäuse 2 angeordnet, beispielweise mit diesem verklebt, verlötet, oder verschweißt sein. Bei der mindestens einen Durchbrechung 12 kann es sich um eine vorzugsweise runde Aussparung handeln, die dazu ausgebildet ist, die über die Abgabeöffnung 4 abgegebene Flüssigkeit in Richtung des Standbereiches 5 durch die Halteplatte 11 durchzuleiten. Für eine ausreichende UV-Strahlung innerhalb des Abgabebereiches 6 können die UV-Strahlungsquellen 10 vorzugsweise gleichmäßig um die Durchbrechung 12 an der Ober- und/oder Unterseite 11.1, 11.2 der Halteplatte 11, beispielweise konzentrisch um die Durchbrechung 12 der Ober- und Unterseite 11.1 und 11.2 der Halteplatte 11, angeordnet sein. In der Figur 1 ist die Ausrichtung der UV-Strahlung der UV-Strahlungsquellen 10 mittels mehrerer Pfeile stilisiert dargestellt, wobei die Länge der Pfeile jedoch keine Rückschlüsse über die Intensität und/oder Reichweite der UV-Strahlung zulassen.

Vorzugsweise kann es sich bei den UV-Strahlungsquellen 10 um UV-C-Strahlungsquellen, besonders bevorzugt um UV-C Leuchtdioden handeln. Weiterhin bevorzugt weisen die UV-Strahlungsquellen 10 ein Lichtwellenlängenspektrum zwischen 255 und 264 nm, besonders bevorzugt eine Lichtwellenlänge von 260nm, auf. Nach einer weiteren Ausführungsvariante kann mindestens eine die UV-Strahlungsquellen 10 als Gasentladungslampe, vorzugsweise als Niederdruckgasentladungslampe und/oder Hochdruckgasentladungslampe, besonders bevorzugt als Niederdruck - Quecksilberdampflampe und/oder Hochdruck - Quecksilberdampflampe ausgebildet sein. Ferner können die UV-Strahlungsquellen 10 bezogen auf ihre Mittellängsachse A einen Abstrahlwinkel W zwischen 1° und 75°, besonders bevorzugt zwischen 3° und 60°, aufweisen. In Figur 2 ist der Abstrahlwinkel W bezogen auf die Mittellängsachse A bespielhaft an einer UV-Strahlungsquelle 10.1 zu Illustrationswecken eingezeichnet. Dabei handelt es sich jedoch ausdrücklich nicht um die erfindungsgemäße Ausrichtung der UV-Strahlungsquelle 10.1. Vielmehr hat es sich als besonders vorteilhaft herausgestellt, wenn die Mittellängsachsen A der jeweiligen UV-Strahlungsquellen 10 auf den zu entkeimenden Gegenstand zeigen. Damit wird eine besonders effiziente Entkeimung sowohl des die Abgabeöffnung 4 bildenden freien Endes des Flüssigkeitskanals 3 innen bestrahlt, als auch des Abgabebereiches bewirkt. Also die Mittellängsachsen A der UV-Strahlungsquellen 10.1 auf die Abgabeöffnung 4 ausgerichtet sind, während die Mittellängsachsen A der UV-Strahlungsquellen 10.2 auf den Standbereich 5 zeigen. Zudem vorteilhaft weisen die UV-Strahlungsquellen 10.1 einen Abstrahlwinkel W von 3° auf, während die UV-Strahlungsquellen 10.2 einen Abstrahlwinkel W von bevorzugt 60° aufweisen. Beispielsweise kann die zeitliche Taktung, also die Einschalt- oder Strahlungsdauer, der UV-Strahlungsquellen 10 mittels einer Steuereinrichtung 14 so gewählt werden, dass die UV-Strahlungsquellen 10 vor und/oder während und/oder nach der Abgabe der Flüssigkeit für ein definierbares Zeitintervall, vorzugsweise zwischen 5 und 30 Sekunden, besonders bevorzugt zwischen 10 und 20 Sekunden, eingeschaltet sind. Dabei kann das Einschalten der Strahlungsquellen 10 manuell oder automatisch, beispielweise an das Signal des Bewegungssensors gekoppelt und mittels der Steuereinrichtung 14 gesteuert, erfolgen. Es kann weiterhin vorgesehen sein, dass die Strahlungsquellen 10 unabhängig von der tatsächlichen Nutzung der Spendervorrichtung 1 intervallmäßig in gewissen Zeitabständen, beispielweise einmal pro Stunde für dann vorzugsweise zwischen 15 und 60 Sekunden, mittels der Steuereinrichtung 14 eingeschaltet werden.

Weiterhin weist das Gehäuse 2 vorzugsweise im Übergang des Bodenbereiches 2.5 zum Frontbereich 2.1 eine Fußsteuereinrichtung13 auf, die dazu ausgebildet ist, die Abgabe der Flüssigkeit beispielweise über ein nicht dargestelltes Magnetventil auszulösen, indem beispielweise ein an der Fußsteuereinrichtung 13 vorgesehenes, ebenfalls nicht dargestelltes Fußpedal betätigt wird. Es kann dabei vorgesehen sein, dass die Abgabe der Flüssigkeit auf eine bestimmte Abgabemenge, beispielweise 0,2 Liter, mittels der mit der Fußsteuereinrichtung 13 zusammenwirkenden Steuereinrichtung 14 voreinstellt ist, so dass die voreingestellte Abgabemenge durch kurzzeitiges Auslösen der Fußsteuereinrichtung 13 vollständig über die Abgabeöffnung 4 in das Flüssigkeitsgefäß 7 abgegeben wird. Alternativ kann die Abgabe der Flüssigkeit auch auf die Dauer der Betätigung der Fußsteuereinrichtung 13 beschränkt sein, derart, dass der Nutzer der Spendervorrichtung 1 über die gesamte Zeit des Füllens des Flüssigkeitsgefäßes 7 die Fußsteuereinrichtung 13 beispielsweise über das Fußpedal betätigt halten muss.

Die Steuereinrichtung 14 ist dabei vorzugsweise im Frontbereich 2.1 für einen Nutzer der Spendervorrichtung 1 über eine Bedieneinrichtung 15 einstellbar bzw. programmierbar. Hierfür weist die Bedieneinrichtung 15 vorzugsweise mehrere Bedienelemente 15.1 bis 15.4, beispielsweise Druckknöpfe auf, so dass durch eine Betätigung der Bedienelemente 15.1 bis 15.4 an der Bedieneinrichtung 15 verschiedene Parameter in der Steuereinrichtung 14 vorauswählbar und/oder voreinstellbar sind. Derartig auswählbare und/oder einstellbare Parameterwerte können beispielsweise die gewünschte Abgabetemperatur der Flüssigkeit und/oder die Flüssigkeitsmenge und/oder der Kohlensäuregehalt und/oder die manuelle oder gesteuerte Abgabe der Flüssigkeit sein.

Figur 2 zeigt eine weitere Ausführungsvariante der erfindungsgemäßen Spendervorrichtung 1, bei der an dem Flüssigkeitskanal 3 wenigstens eine Heizvorrichtung 16 zum elektrischen Beheizen im Bereich der Abgabeöffnung 4 vorgesehen ist. Die Heizvorrichtung 16 bildet hierbei eine thermische Keimsperre aus. Die mindestens eine Heizvorrichtung 16 kann als Rohrstück ausgebildet sein, das auf den Außenumfang des Flüssigkeitskanals 3 an dessen Abgabebereich 4 aufgeschoben und dort befestigt, beispielsweise festgeklebt oder mittels einer Stellschraube fixiert wird. Die mindestens eine Heizvorrichtung 16 kann auch als Manschette ausgebildet sein. Alternativ kann die mindestens eine Heizvorrichtung 16 auch in das Rohrende des Flüssigkeitskanals 3, z. B. in unmittelbarer Nähe der Abgabeöffnung 4, in die Leitungswand eingebaut oder integriert sein. Mittels der mindestens einen Heizeinrichtung 16 wird der Flüssigkeitskanal 3 im Bereich der Abgabeöffnung 4 in regelmäßigen Abständen während der Zeit, in der keine Flüssigkeit über die Abgabeöffnung 4 des Flüssigkeitskanals 3 abgegeben wird, kurzzeitig auf ein so hohe Temperatur aufgeheizt, vorzugsweise höher als 80°C, dass eine Keimbildung und damit ein Eindringen von Keimen durch die Abgabeöffnung 4 in den nach innen anschließenden Teil des Flüssigkeitskanals 3 verhindert wird.

Die mindestens eine Heizvorrichtung 16 kann auch als Heizspule ausgebildet sein, die mit Niedervoltspannung, vorzugsweise mit 24V, gespeist wird. Die Stromstärke wird dabei derart eingestellt, dass eine Aufheizung des Flüssigkeitskanals 3 im Bereich der Abgabeöffnung 4 erfolgt, die beispielsweise zwischen 85°C und 125°C liegt, also einer Temperatur, bei der der Aufbau eines Biofilms im Bereich der Abgabeöffnung 4 sicher vermieden wird.

In einer alternativen Ausführungsform kann die Heizvorrichtung 16 auch zur Erhitzung der Abgabeöffnung 4 als sekundär einwirkende thermische Heizvorrichtung ausgebildet sein, die beispielsweise durch eine Wirbelstromheizung gebildet ist.

Dabei kann vorgesehen sein, dass die mindestens eine Heizeinrichtung 16 und die wenigstens eine auf den Standbereich 5 ausgerichtete UV-Strahlungsquelle 10.2 mittels der Steuereinrichtung 14 separat zueinander schaltbar ausgebildet sind, sowohl bezogen auf den Einschaltzeitpunkt, als auch auf die Behandlungsdauer.

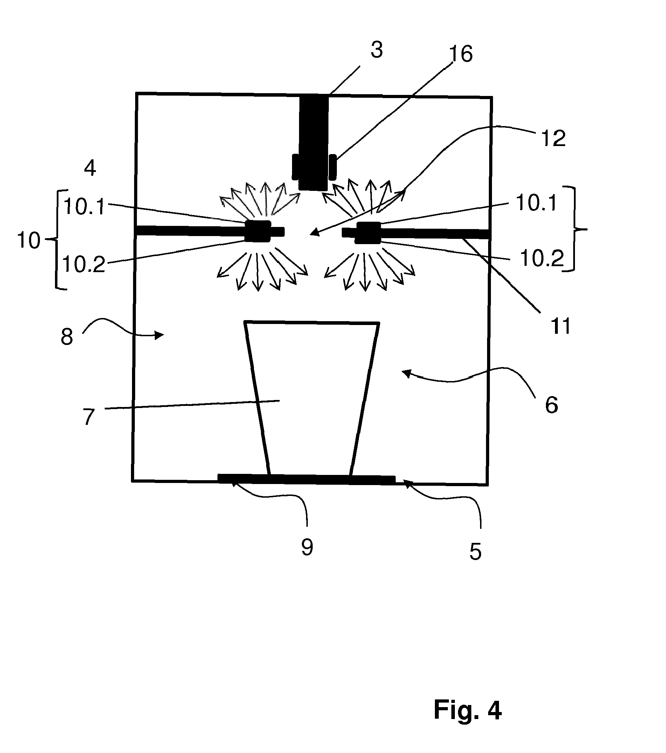

Unterschiedlich zu den vorigen Figuren zeigt Figur 4 dabei eine Ausführungsvariante der Spendervorrichtung 1, bei der zur weiteren Effizienzsteigerung der Keimfreimachung der Abgabeöffnung 4 des Flüssigkeitskanals 3 sowohl die wenigstens eine Heizvorrichtung 16, als auch die wenigstens eine UV-Strahlungsquelle 10.1 vorgesehen sind.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegend Erfindungsgedanke verlassen wird.

### Bezugszeichenliste

- 1: Spendervorrichtung
- 2: Gehäuse
- 2.1: Frontbereich
- 2.2: rechter Seitenbereich
- 2.3: linker Seitenbereich
- 2.4: Deckelbreich
- 2.5: Bodenbereich
- 2.6: Rückbereich
- 3: Flüssigkeitskanal
- 4: Abgabeöffnung
- 5: Standbereich
- 6: Abgabebereich
- 7: Flüssigkeitsgefäß
- 8: Ausnehmung
- 9: Abflusseinrichtung
- 10: UV-Strahlungsquelle
- 10.1: UV-Strahlungsquelle
- 10.2: UV-Strahlungsquelle
- 11: Halteplatte
- 12: Durchbrechung
- 13: Fußsteuereinrichtung
- 14: Steuereinrichtung
- 15: Bedieneinrichtung
- 15.1 - 15.4: Bedienelemente
- 16: Heizeinrichtung

- A: Mittellängsachse
- W: Abstrahlwinkel bezogen auf die Mittellängsachse A

## Patentansprüche

1. Spendervorrichtung (1) zum keimfreien Abgeben von Flüssigkeiten umfassend wenigstens einen in einem Gehäuse (2) angeordneten Flüssigkeitskanal (3) mit einer Abgabeöffnung (4) zum Abgeben der Flüssigkeit und einen unterhalb der Abgabeöffnung (3) vorgesehenen Standbereich (5) zum Abstellen eines Flüssigkeitsgefäßes (7), wobei zwischen der Abgabeöffnung (3) und dem Standbereich (5) ein von außen zugänglicher Abgabebereich (6) zum Abgeben der Flüssigkeit in das Flüssigkeitsgefäß (7) ausgebildet ist, **dadurch gekennzeichnet, dass** zwischen der Abgabeöffnung (3) und dem Standbereich (5) wenigstens zwei UV-Strahlungsquellen (10) vorgesehen sind, wobei mindestens eine UV-Strahlungsquelle (10.2) auf den Standbereich (5) und mindestens eine weitere UV-Strahlungsquelle (10.1) auf die Abgabeöffnung (3) ausgerichtet ist.

2. Spendervorrichtung nach Anspruch 1, **dadurch gekennzeichnet, dass** an dem Flüssigkeitskanal (3) wenigstens eine Heizvorrichtung (16) zum elektrischen Beheizen im Bereich der Abgabeöffnung (4) angeordnet ist.

3. Spendervorrichtung (1) zum keimfreien Abgeben von Flüssigkeiten umfassend wenigstens einen in einem Gehäuse (2) angeordneten Flüssigkeitskanal (3) mit einer Abgabeöffnung (4) zum Abgeben der Flüssigkeit und einen unterhalb der Abgabeöffnung (3) vorgesehenen Standbereich (5) zum Abstellen eines Flüssigkeitsgefäßes (7), wobei zwischen der Abgabeöffnung (3) und dem Standbereich (5) ein von außen zugänglicher Abgabebereich (6) zum Abgeben der Flüssigkeit in das Flüssigkeitsgefäß (7) ausgebildet ist, **dadurch gekennzeichnet, dass** an dem Flüssigkeitskanal (3) wenigstens eine Heizvorrichtung (16) zum elektrischen Beheizen im Bereich der Abgabeöffnung (4) angeordnet ist und dass zwischen der Abgabeöffnung (3) und dem Standbereich (5) mindestens eine UV-Strahlungsquelle (10.2) vorgesehen ist, die auf den Standbereich (5) ausgerichtet ist.

4. Spendervorrichtung nach Anspruch 3, **dadurch gekennzeichnet, dass** zwischen der Abgabeöffnung (3) und dem Standbereich (5) mindestens eine weitere UV-Strahlungsquelle (10.1) vorgesehen ist, die auf die Abgabeöffnung (4) ausgerichtet ist.

5. Spendervorrichtung nach einem der Ansprüche 1 bis 4, **dadurch gekennzeichnet, dass** zwischen der Abgabeöffnung (3) und dem Standbereich (5) mindestens eine Halteplatte (11) mit einer Ober- und Unterseite (11.1, 11.2) und wenigstens einer Durchbrechung (12) vorgesehen ist und dass an der Unterseite (11.2) die mindestens eine auf den Standbereich (5) ausgerichtete UV-Strahlungsquelle (10.2) angeordnet ist.

6. Spendervorrichtung nach Anspruch 5, **dadurch gekennzeichnet, dass** an der Oberseite (11.1) der wenigstens einen Halteplatte (11) die mindestens eine weitere auf die Abgabeöffnung (4) ausgerichtete UV-Strahlungsquelle (10.1) angeordnet ist.

7. Spendervorrichtung nach einen der Ansprüche 1 bis 6, **dadurch gekennzeichnet, dass** die UV-Strahlungsquellen (10) ein Lichtwellenspektrum zwischen 255nm und 264nm, besonders bevorzugt eine Lichtwellenlänge von 260nm aufweisen.

8. Spendervorrichtung nach einem der Ansprüche 1 bis 7, **dadurch gekennzeichnet, dass** mindestens eine UV-Strahlungsquelle (10) als UV-Leuchtdiode, vorzugsweise als UV-C Leuchtdiode ausgebildet sind.

9. Spendervorrichtung nach einem der Ansprüche 1 bis 8, **dadurch gekennzeichnet, dass** mindestens eine UV-Strahlungsquelle (10) als Gasentladungslampe, vorzugsweise als Niederdruckgasentladungslampe und/oder Hochdruckgasentladungslampe, besonders bevorzugt als Niederdruck-Quecksilberdampflampe und/oder Hochdruck - Quecksilberdampflampe ausgebildet ist.

10. Spendervorrichtung nach einem der Ansprüche 1 bis 9, **dadurch gekennzeichnet, dass** die UV-Strahlungsquellen (10) einen Abstrahlwinkel (W) bezogen auf eine Mittellängsachse (A) zwischen 1° und 75°, besonders bevorzugt zwischen 3° und 60°, aufweisen.

11. Spendervorrichtung nach einem der Ansprüche 1 bis 10, **dadurch gekennzeichnet, dass** die Mittellängsachse (A) der wenigstens einen weiteren UV-Strahlungsquelle (10.1) auf die Abgabeöffnung (4) und die Mittellängsachse (A) der mindestens einen UV-Strahlungsquelle (10.2) auf den Standbereich (5) ausgerichtet sind und/oder dass die mindestens eine weitere UV-Strahlungsquelle (10.1) einen Abstrahlwinkel (W) von jeweils 3° und die mindestens eine UV-Strahlungsquelle (10.2) einen Abstrahlwinkel (W) von jeweils 60° aufweist.

12. Spendervorrichtung nach einem der Ansprüche 1 bis 11, **dadurch gekennzeichnet, dass** die wenigstens eine Heizvorrichtung (16) als Heizspule oder als Wirbelstromheizung ausbildet ist, die an oder im Bereich der Abgabeöffnung (4) angeordnet ist.

13. Spendervorrichtung nach Anspruch 12, **dadurch gekennzeichnet, dass** die Heizspule mit einer Niedervoltspannung, vorzugsweise mit einer Spannung von 24V betrieben wird und/oder dass die Heizspule mit einer Stromstärke betrieben wird, die eine Aufheizung des Flüssigkeitskanals (3) im Bereich der Abgabeöffnung (4) auf eine Temperatur zwischen 85°C und 125°C bewirkt.

14. Spendervorrichtung nach einem der Ansprüche 1 bis 13, **dadurch gekennzeichnet, dass** die wenigstens eine Heizeinrichtung (16) und die mindestens eine auf den Standbereich (5) ausgerichtete UV-Strahlungsquelle (10.2) separat zueinander schaltbar sind.

15. Spendervorrichtung nach einem der Ansprüche 1 bis 14, **dadurch gekennzeichnet, dass** eine Fußsteuereinrichtung (13) zur Steuerung der Abgabe der Flüssigkeit vorgesehen ist.
